# EUROPEAN PATENT SPECIFICATION

(11) **EP 3 241 372 B1**
(45) Date of publication and mention of the grant of the patent: **23.09.2020**
(21) Application number: 15876233.6
(22) Date of filing: 30.12.2015
(51) Int. Cl.: H04W 4/02

(54) **CONTEXTUAL BASED GESTURE RECOGNITION AND CONTROL**
KONTEXTBASIERTE GESTENERKENNUNG UND STEUERUNG
COMMANDE ET RECONNAISSANCE DE GESTES BASÉES SUR LE CONTEXTE

(30) Priority: 30.12.2014 US 201462097648 P; 29.12.2015 US 201514982113
(43) Date of publication of application: 08.11.2017
(73) Proprietor: Tyco Fire & Security GmbH, 8212 Neuhausen am Rheinfall (CH)
(72) Inventor: ROSEWALL, Samuel D. Jr., Vista, CA 920084 (US)
(74) Representative: Wright, Howard Hugh Burnby
(86) International application number: PCT/US2015/068013
(87) International publication number: WO 2016/109636

(56) References cited:
- US-A1- 2009 319 161
- US-A1- 2011 136 511
- US-A1- 2011 312 311
- US-A1- 2012 280 783
- US-A1- 2012 282 974
- US-A1- 2013 113 993
- US-A1- 2014 028 438
- US-B1- 8 350 694
- US-B1- 9 119 068
- US-B1- 9 141 150

## Description

### Claim of Priority

This application claims priority under 35 U.S.C. §119(e) to provisional U.S. Patent Application 62/097,648, filed on December 30, 2014, entitled: "Contextual Based Gesture Recognition and Control" and to U.S. Patent Application 14/982,113, entitled: "Contextual Based Gesture Recognition and Control".

### Background

This description relates to control of electronic devices and systems such as alarm/intrusion systems.

It is common for businesses and consumers to have systems that require user input to control/manage. Such user systems are ubiquitous. Examples of such systems include commercial/residential surveillance and/or intrusion and/or alarm systems for detecting presence of conditions at premises and for sending information such as video from cameras or messages from detector/sensor devices to a central monitoring station.

In these surveillance and/or intrusion and/or alarm types of systems there is a developing technology for mobile security management systems/applications. One such current approach is the Tyco® Integrated Security Mobile Security Management application that provides intuitive security system control, user management, and remote location management features. The application combines remote control security with the ability to view live streaming video on an Android™ smartphone or tablet computer. The application also allows functions such as arming and disarming intrusion system from the mobile device, receiving text and email alerts, manage and bypass zones, remote management of user access and so forth.

US 2011/0312311 A1 is directed to methods and apparatuses that may be implemented in and/or with a mobile device to allow gesture based remote control of one or more controllable devices.

US 2013/0113993 A1 is directed to a software application and system that enables point and click interaction with a TV screen. Some embodiments utilize motion sensing and touch screen input for gesture recognition interacting with video content or interactive device.

### SUMMARY

However, one of the major limitations of traditional approaches to mobile security management applications is that in order for a user to interact with various controllable items within, e.g., a home, requires the user to manually interact or execute an application, e.g., a web application using a mobile or fixed computer system or execution of a mobile application on a mobile smart phone device. This type of interaction often causes a lag between the time the consumer decides the device should react and when the device actually reacts. This type of interaction can be confusing or difficult to learn for some users, as many systems require complicated user interactions through menus and the like of mobile security management applications.

According to an aspect a mobile device is defined in claim 1.

One or more of the above aspects may provide one or more of the following advantages.

These techniques improve the response time of a device/system to a user's desired operation to perform on the particular device/system, thus making the experience more seamless and intuitive for the user.

The details of one or more embodiments of the invention are set forth in the accompanying drawings and the description below. Other features, objects, and advantages of the invention are apparent from the description and drawings, and from the claims and the various examples discussed herein.

### DESCRIPTION OF DRAWINGS

FIG. 1 is a schematic diagram of an example security system at a premises.
FIG. 2 is a block diagram depicting details of a user mobile device.
FIGS. 3, 4 and 4A-4B are flow diagrams showing an example processes performed by a processor in the user mobile device.
FIGS. 5A-5H are depictions of a smart watch device display face showing examples of interfaces to perform various processes by a processor of the smart watch device.

### DETAILED DESCRIPTION

Described below are techniques that allow users to interact with remote devices/systems through indirect user interaction with a client, mobile device. For purposes of explanation the mobile device is a cell phone or a smart watch, and the exemplary devices/systems are those commonly found within a user's house, such as an electronic lock on a door, a security system, remote controllable speakers, remotely controlled drapes/blinds, etc. In the example below, the system that is remotely controlled is a security system (e.g., a physical intrusion detection system). Other systems/devices could be controlled in the manner described below.

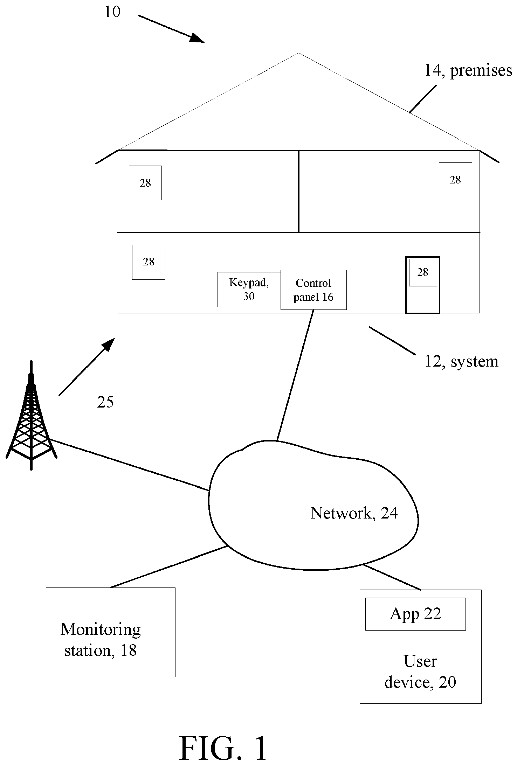

Referring now to FIG. 1, an arrangement 10 includes a security system 12 at premises 14. In this arrangement 10, the premises 14 is a residential house, but the premises may alternatively be any type of premises, e.g., commercial, industrial, buildings etc. The security system 12 includes a control panel 16 and various and likely numerous sensors/detectors 28 dispersed through the premises, and a keypad 30. The terms sensor and detector are used interchangeable herein. The sensors/detectors 28 are wireless (or wired) coupled to the panel 16. The security system 12 is in communication with a central monitoring station 18 and one or more authorized user devices 20 (only one being shown) through one or more data networks 24 (only one shown), such as the Internet. The control panel 16 is in communication with one or more detectors 28 and receives information about the status of the monitored premises from the detectors 28.

Examples of detectors 28 include motion detectors, video cameras, glass break detectors, noxious gas sensors, smoke/fire detectors, microphones, contact/proximity switches, and others. The detectors 28 may be hard wired to the control panel 16 or may communicate with the control panel 16 wirelessly. The detectors 28 sense/detect the presence of a condition, such as motion, glass breakage, gas leaks, fire, and/or breach of an entry point, among others, and send electronic messages, e.g., via wires or wirelessly, to the control panel 16. Based on the information received from the detectors, the control panel 16 determines whether to trigger alarms, e.g., by triggering one or more sirens (not shown) at the premises 14 and/or sending alarm messages to the monitoring station 18 and/or to the user device 20. In some implementations, some of the detectors 28 could send electronic messages wirelessly to the user device 20.

A user accesses the control panel 16 to control the security system 12. Exemplary control actions include disarming the security system, arming the security system, entering predetermined standards for the control panel 16 to trigger alarms, stopping alarms that have been triggered, adding new detectors, changing detector settings, viewing the monitoring status in real time, etc.

The user can access the security system 12, directly at the premises 14, e.g., through the keypad 30 connected to the control panel 16. In some implementations, the control panel 16 may also include a display (not shown) that shows a graphical user interface to assist a user's control of the security system 12. The display may be a touch screen display type such that the user may interact with the control panel and the security system directly through the display.

The user may also access the control panel 16 through the user device 20, which can be at or be remote from the premises 14. One conventional method to interact with the control panel is via a conventional application that presents user interface screens or windows on the user device. To allow a user to access the control panel 16 through the user device 20, and to protect the security system 12 from unauthorized access, the control panel 16, the monitoring center 18 and/or the user device 20 implements one or more levels of authentication. Authentication can be of various types including user biometric authentication, input from a user, such as a security code or a PIN provided to the user, a password created by the user, and/or an RFID chip provided to the user. In some implementations primary and secondary levels of authentication can be used.

Authorized users gain access to the security system 12 to request the security system 12 to perform one or more of the above control actions (or other control/management actions). Whether access is made by local (or direct) physical interaction with the control panel 16 of the security system 12, via the keypad 30 or remote (or indirect) through the user device 20, the security system 12 receives the commands via a network connection on the control panel 16 and receives messages that configure the system 12, to perform the control action(s) specified in the request when the users are determined to be authorized persons for such requests.

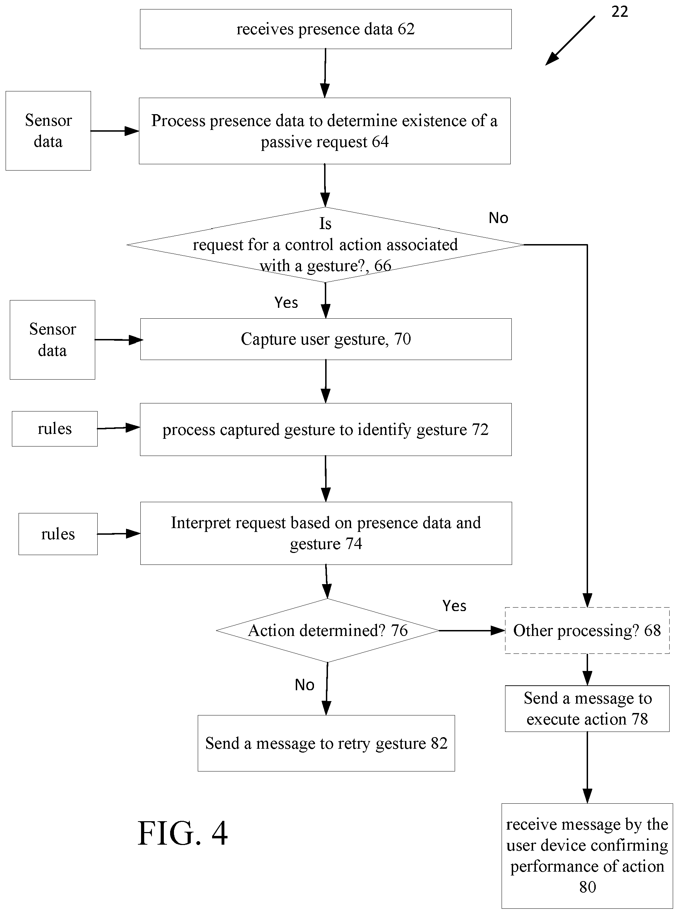

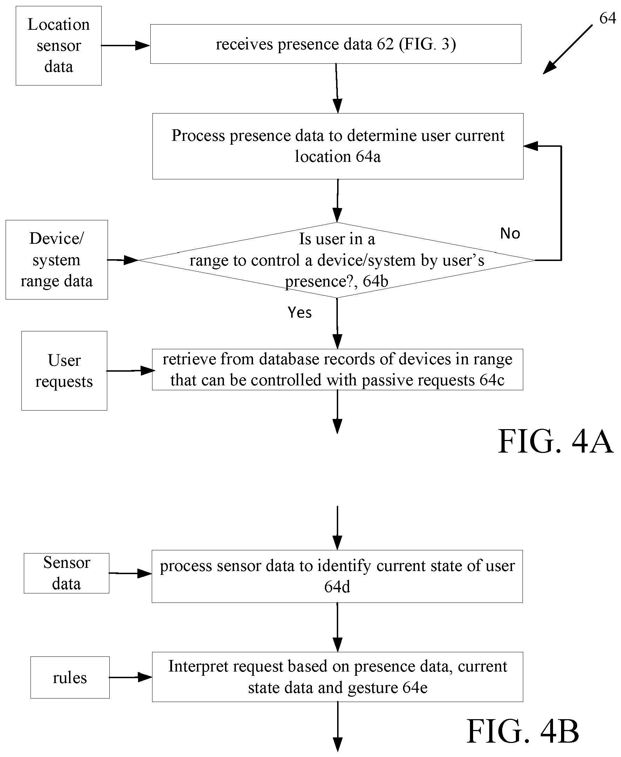

Also shown in FIG. 1, residing on the user device 20 is a mobile device access management application 21 that produces messages that allows a user to interact with the remote devices/systems, e.g., system 12 (through control panel 16) through indirect interaction with one or more client, mobile devices, e.g., device 20 on which the mobile device access management application 21 executes. In some implementations, the mobile device access management application 21 can also provide access via the conventional direct interaction using graphical user interfaces and the like on the user device 20. The mobile device access management application 21 executes on the user device 20 and in conjunction with user presence and user gestures produces such commands to control the system 12. The user device can be a smartphone or a wearable component, such as a smartwatch (as shown in FIGS. 4A-4I.

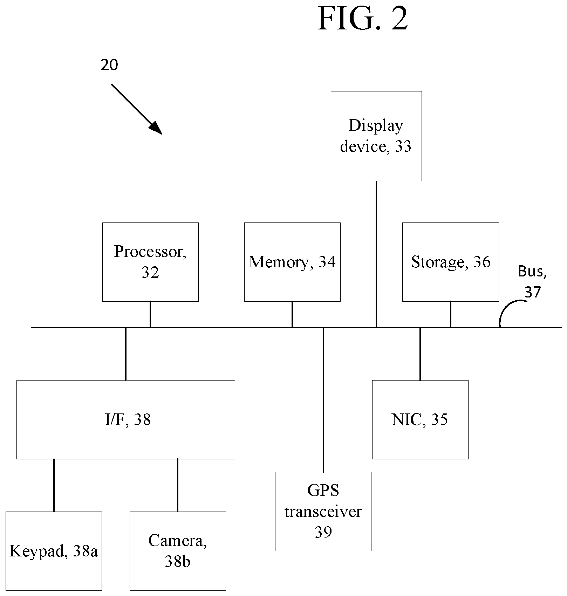

Referring now to FIG. 2, the user device 20 (whether a smartwatch or smartphone, a tablet computing device, or other portable, mobile handheld user device) include a processor device 32, memory 34 operative coupled to the processor device 32, storage 36, interfaces 38, a display 33, network interface cards 35, user devices coupled via the interfaces 28, e. g,, keypad 38a and camera 38b, one or more buses 37, and so forth, as well as a GPS (Global Positioning) System transceiver 39.

Executed by the processor device 32 in association with memory 34 and/or storage 36 is the mobile device access management application 21. The mobile device access management application 21 receives user input from the user devices and produces control messages that are sent via the network interface card 35 to the control panel 16 (FIG. 1), via a network connection that is established between the system 12 and the user device 20. The network interface card 35 sends data to/from the systems (or devices) that are remotely controlled by the user device 20, and which are connected to the network. The network can be a local network and/or part of the Internet.

Requirements that make a user device "smart" e.g., as in a smartphone or a smart watch require that the device 20 have a processor device that is capable of executing the application 21, (and in general may execute other types of applications) under control of a mobile operating system, e.g., an operating system for smartphones, tablets, PDAs, or other mobile devices. A mobile operating system supports specific "mobile" features, such as motion control and GPS. Mobile operating systems include some features found in a personal computer operating system along with other features such as touchscreen control for the display 25, cellular, and/or Bluetooth, connection Wi-Fi, connections, GPS mobile navigation, camera/video camera, etc.

The mobile device access management application 21 combines presence recognition (e.g., radio frequency based, or motion-detector based or other technologies such as GPS), with gesture or motion recognition capture, via accelerometers, infrared detectors that run applications built into mobile devices, such as smartphones and watches. By combining these elements of presence and gesture, the user is provided with the ability to make a gesture in a specific location and have a specific device/system react to the gesture in minimal time and provide the desired behavior. The mobile device access management application 21 enables control of devices/systems with hand gestures throughout a user's premises by combining presence recognition with gesture or motion recognition.

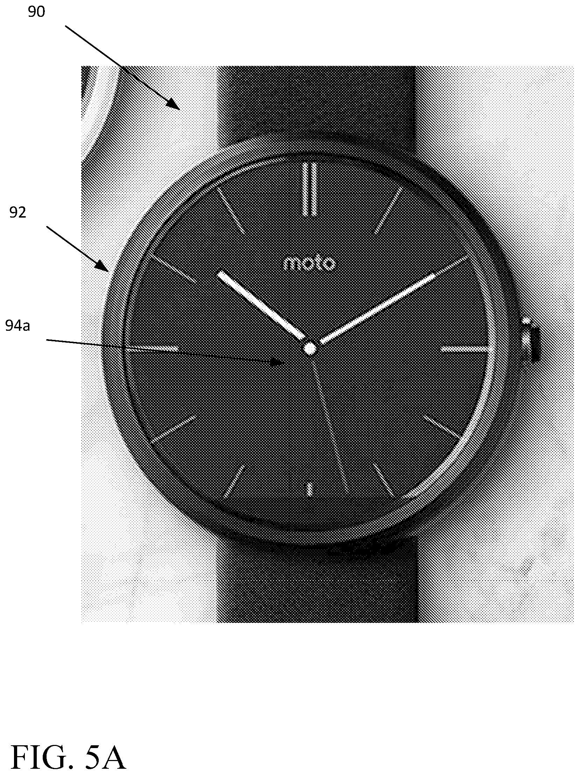

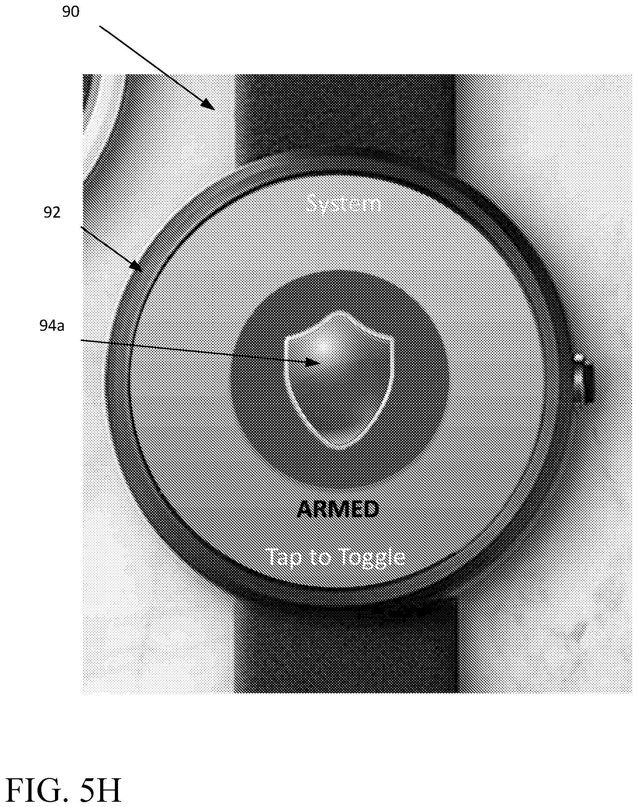

One type of gesture is movement of the user's mobile device 20 in one of several pre-defined patterns. Another type of gesture is movement by a user of a pointing device across a touchscreen display portion of the mobile device, as will be discussed below in FIGS. 5A-5H.

The mobile device access management application 21 can be part of a security management application that provides security system control and user management features where the mobile device access management application 21 is integrated with the security management application. Alternatively, the mobile device access management application 21 can be a standalone application.

In one aspect, the mobile device access management application 21 processes passive requests and active requests. This implementation of the mobile device access management application 21 will be used as an embodiment in the description herein, noting that mobile device access management application 21 could be configured to process only passive requests.

A passive request does not involve an explicit request made by the user, but rather the request is inferred by processing in the client device 20. Examples of passive requests include presence detection by the user device 20, detecting that the user device, and presumably the user, is approaching a device/system that can be controlled or interacted with by the mobile device access management application 22. The detection by the user device approaching the device/system could also involve the user device 20 recognizing that the user has performed a gesture that the device 20 captured and recognized. The detection of presence and as appropriate gestures are processed by the device 20 that sends messages to control (or otherwise perform an action) on the device/system.

A request can an active request. An active request involves an explicit request action that is performed by the user on the client device 20. Examples of active requests include a user accessing a conventional graphical user interface that displays control functions for the device/system to be controlled, actively inputting data into the device and causing the device 20 to send messages to the device/system to be controlled.

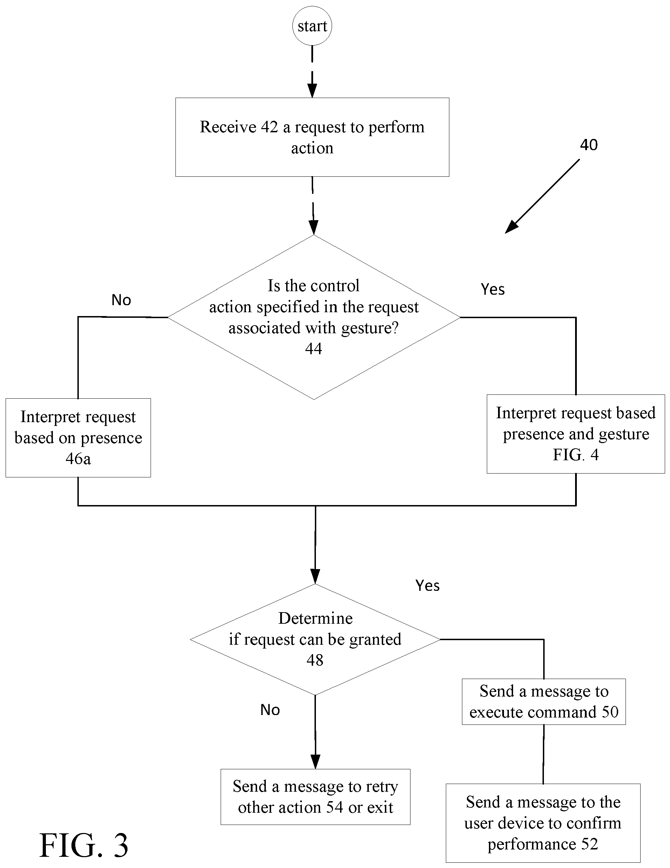

Referring now to FIG. 3, details of the mobile device access management application 21 are shown. In one aspect, the mobile device access management application 21 on the user device 20 receives 42 an active request to perform an action on a system/device. A server process on the client device 20 determines 44 whether the request for the control action was accompanied by a gesture, i.e., that an active request was made.

When the server process on the client device 20 determines that an active request was made (gesture + presence), the server process interprets 46b the request according to presence and gesture (see FIG. 4). Otherwise, when the server process on the client device 20 determines that the request made was not accompanied by a gesture (only presence), the server process interprets 46a the request as a passive request.

With either the passive or active request the server process on the client device 20, determines 48 if any additional action(s) is/are and when the determination is met the server process performs 50 the processing according to the passive request. When either the passive or active request was not fully determined by the server process on the client device 20 by failure of any one or more of additional action(s) not being met, the server process executes instructions that sends a user a message 54 to retry according to the request, the other action if the action was not successfully completed.

Either as part of the server process that interprets 46b the request or the server process that determines if additional actions are required, the mobile device access management application 21 will also use the location data to determine whether the mobile device is within a predefined distance from the device that the mobile device access management application 21 seeks to control. For instance, the mobile device 20 can store a parameter that indicates for each device/system if there is a requirement for proximity of the device/system to the mobile device. If so, a value would be included. Thus, for instance a protocol can be set up indicating that the mobile device to control a security system must be within 50 feet of the premises.

For instance, if the processing is to disarm the system 12 and the system 12 requires other information before the action is performed such as authentication, or if the system 12 needs to determine whether the action is authorized or valid for the user, the system 12 will perform that processing as part of the determining feature 48, prior to performing the action associated with the received request. If the additional processing is successfully executed, then the action corresponding to the request is performed 50. Otherwise the system 12 can take other actions, such as a retry or lockout or merely exit.

Depending on the nature of the system to be controlled by the client device 20, the mobile device access management application 21 on client device performs the requisite processing in association with corresponding applications on the system/device to be controlled.

Referring now to FIG. 4, the mobile device access management application 21 processes passive requests, as well as the active requests discussed above. In this mode, the server process on the client device 20 receives 62 information that indicates a user's presence in a geographic location. The mobile device access management application 21 determines 64 existence of a passive request using one or more algorithms based on the presence information. These algorithms are dependent on the device/system that the mobile device access management application 21 seeks to control, the present state of the device/system to be controlled, and the location of the user device 20 in relation to the device/system to be controlled, as determined by the presence data. That is, in order to process received presence data to determine if a user has made an implicit request, the server process determines a distance from the device/system to be controlled and/or determines the presence of the user device 20 within a specific location.

The server process also determines 56 whether the passive request made requires a gesture 66. If the server process determines that the passive request made does not require a gesture, the server process determines or executes 68 any other processing required by the control action. The requirement for "other processing required by the control action" is dependent on the specific control action involved in the request and may not be required processing for all requests.

On the other hand, if the server process determines that the passive request made does require a gesture, the server process captures 70 a user gesture (if none is captured, the process can exit or wait for capture of the gesture or take other action not shown). Some requests to perform an action require the concurrent receipt of a gesture, whereas others may not. Those requests that require a subsequent receipt of gesture, process the gesture in order for the app 21 to determine what action specifically is required by the request. In order to process the captured gesture, the server process applies a set of rules that first detect the gesture and then map the detected gesture to recognized and identify the gesture 72.

The server process applies a set of rules based on the request, the presence information and the recognized gesture to determine or interpret 74 the request and thus what specific control action is involved in the request. If the mobile device access management application 21 determines 76 a unique action specified by the request, the mobile device access management application 21 determines if the action requires other processing 68.

Thus, either for an action that requires presence information only or an action that requires both presence and gesture data, the mobile device access management application 21 takes appropriate pre-defined actions to control the remote device/system, by sending 78 a message to execute command and receives 80 message on the user device 20 from the system/device controlled to confirm execution of the action. If the request was not determined from the presence and gesture data, the process causes the user device 20 to issue a retry message or otherwise exits request processing 82.

Referring now to FIGS. 4A and 4B, the techniques described involve computer processing to identify user location and to provide a context of where and what a user is currently doing. Several ways can be used to recognize a user's device location within a premises, e.g., a house including use of r.f. detectors, motion detectors and other presence sensor technologies. Several ways can be used to recognize gestures or identify devices to interact with including gesture specific actions (motions), as well as image recognition built into, e.g., watches and smartphones for example.

As shown in FIG. 4A, processing 64 (FIG. 3) on the client device 20 includes receiving the presence data 62 (FIG. 3) from location sensor type sensors. Processing 64 processes data from many different types of sensors including Wi-Fi (or other R.F. signals) for triangulation with corresponding sensors disposed in the premises, and processing of global positioning system data (GPS) to find coordinates associated with the consumer's current location. Other sensors could be used, especially when there is some prior knowledge of the user's presence in a location. So for example, a sensor that processors humidity could be used to indicate that a user is in an area of high humidity, which if the user was previously determined by Wi-Fi or GPS to be in the user's home, could have the device infer that the user is in a bathroom or kitchen.

Processing 64 on the client device also includes processing 64a this data from these sensors to establish the user's location coordinates within the space of the premises. The processing 64a on the client device 20 processes data from a database that holds data on the devices/systems that the user can control by a passive request. Processing 64 by the mobile device access management application 21 also determines 64b whether the client device 20 is within the range of one or more of such devices/systems that can be controlled via a passive request. If not the client device continues processing 64a the data from the sensors. The processing 64 retrieves 64c from the database, those records of devices that were determined to be in range of the client device and which can be controlled with passive requests.

As shown in FIG. 4B, processing 64 (FIG. 3) on the client device 20 can in addition to processing of the presence data (FIG. 4A), process 64d data from other different types of sensors including sensor data from barometers, photometers, humidity detectors, and thermometers, to provide insight into a current state of a user. For example, a photometer on the client device determines the ambient lighting conditions and processing can determine the user's location is, e.g., in a dark location and the gesture is upwards so the processing can infer that the user wants the lights turned on. Another one is where a thermometer indicates the temperature is below a normal comfortable threshold and the user performs a circular clock-wise gesture that the processing infers as a command to increase heat.

Various other sensors include gyroscope sensors, gravity sensors, magnetometer, and rotational vector sensors or orientation sensors on the user device 20. These latter sensors are a combination of sensors with filtered and cleaned data for easy interpretation. Other sensors include accelerometers, in order to get tilt, pitch, roll, and other sensors for orientation data as well as.

For selected control actions that are requested by a user through a user device, before or after the one or more authentication processes are implemented, the user device 20 can be configured to perform such actions through mobile device access management application 22. The mobile device access management application receives presence recognition data from, e.g., an r.f. detector built into the device, or receives motion recognition data from a motion detector device. Other presence recognition approaches could be used. The mobile device access management application 21 upon receiving the presence information can determine the location of the client device 20. At some point, the mobile device access management application 21 receives a gesture and processes the gesture to recognize the gesture such as with image recognition, or using other sensors, such as accelerometers, in order to get tilt, pitch, roll, or performing simple watch automation control operations on a dial, etc. on the watch.

Exemplary items that can be controlled include Bluetooth® devices such as audio devices to cause the devices to play, pause, move to next or previous tracks, mute, etc. Garage Door opener system, exterior doors with electronic locks, lights, blinds/curtains, thermostat, appliance relays and to arm/disarm security systems and perform other actions on security systems, as in FIG. 1.

### A Use-Case Scenario:

A user walks to the user's house and as the user approaches the front door to the house, the user client device 20, e.g., the user's smart watch has a Bluetooth receiver/transmitter that receives a signal sent, e.g., from an electronic lock on the door. Thus, the mobile device access management application 21 executing on the watch recognizes the signal sent, e.g., from an electronic lock on the door and processes this signal as a request. The mobile device access management application 21 determines if the user's watch is within a predetermined distance of the front door, e.g., by GPS coordinates, and either by the user providing a gesture by, e.g., twisting his/her hand so as to mimic opening the door, or merely by the motion of walking towards the door, the mobile device access management application processes the request and the mobile device access management application 21 executing on the watch sends a signal to the electronic lock on the door causing the electronic lock on the door to unlock. On the mobile device access management application 21 executing on the watch can be authentication processes that enable the user and only the user to have the mobile device access management application 21 execute.

Continuing with the example, a motion detector inside the watch recognizes motion, but also recognizes that the watch is present so a notification message is sent to watch to have the user disarm (e.g., a 30 sec delay to sounding of alarm) prompting the user to enter a code on the watch and once entered the house alarm is disarmed.

The user walks into the kitchen and the user's presence is recognized in the kitchen. The user waves one hand up and the watch recognizes the gesture as a command to turn on the lights in the kitchen. The watch sends a command to a system to turn on the lights. The user pushes his hand forward towards a Bluetooth controlled audio device. A connection is made from watch and device and a default playlist begins playing. The user exits the room and the lights turn off (presence of the watch has been removed), the music stops. The user waves his/her hand outwards direction in living room, and blinds open to allow in light. The user rotates his/her hand in the (command gesture for wake-up) and then rotates clockwise to increase temperature in the room using the interface visually shown on the watch. The user decide to exit the house. The user's presence is has been removed, so the door locks, the blinds close, the lights turn off, the thermostat regulates and the user's watch receives a notification message that the user has left the house and should "ARM" the house alarm system. The user confirm and enter his/her pin to ARM the alarm system.

Referring now to FIGS. 5A-5H, an example of user device 20, as a smartwatch 90 is shown. The smart watch 90 can be any commercially available smartwatch that has the capabilities of features discussed in FIG. 2 for user device 20. The smartwatch 90 has a face display portion 92. The face display 92 is electronically generated via LCD, LED, e-ink or other suitable display technology. The face 92 of the smartwatch 90 as shown will render various screens, generally in a hierarchy of a top or high level screen with lower level screens being rendered upon selection of an icon from a higher level screen, as discussed below.

FIG. 5A shows the smartwatch 90 with a face 92 as a normal watch, appearance where the face 92 displays a screen 94a with the current time.

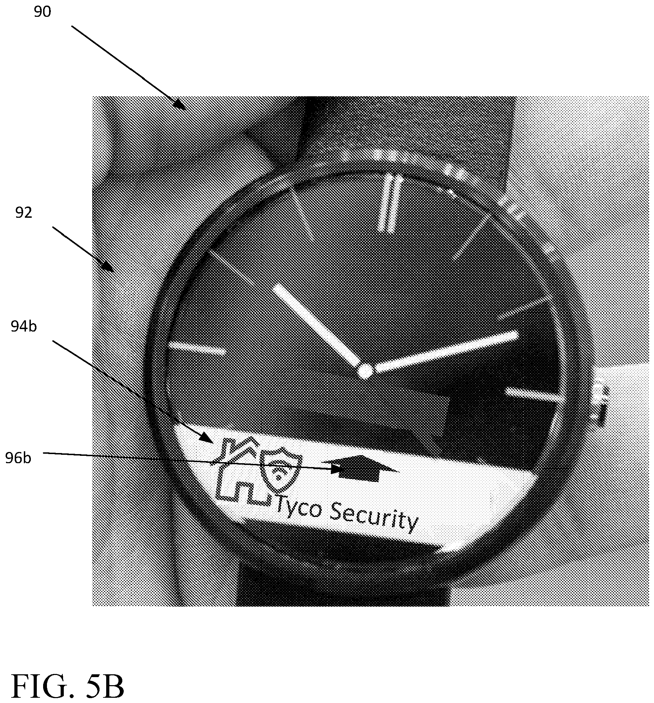

FIG. 5B shows the smartwatch 90 with the face 92, where the mobile device access management application 21 is rendering an interface 94b (a top or high level screen) appearing on the face 92. In this implementation, by a user swiping, e.g., upwards as indicated by the arrow 96b on the face 92, the mobile device access management application 21 enters into a security app where a user can supply a passcode if the application is so configured. Alternatively, the security app can be invoked by a voice recognition command.

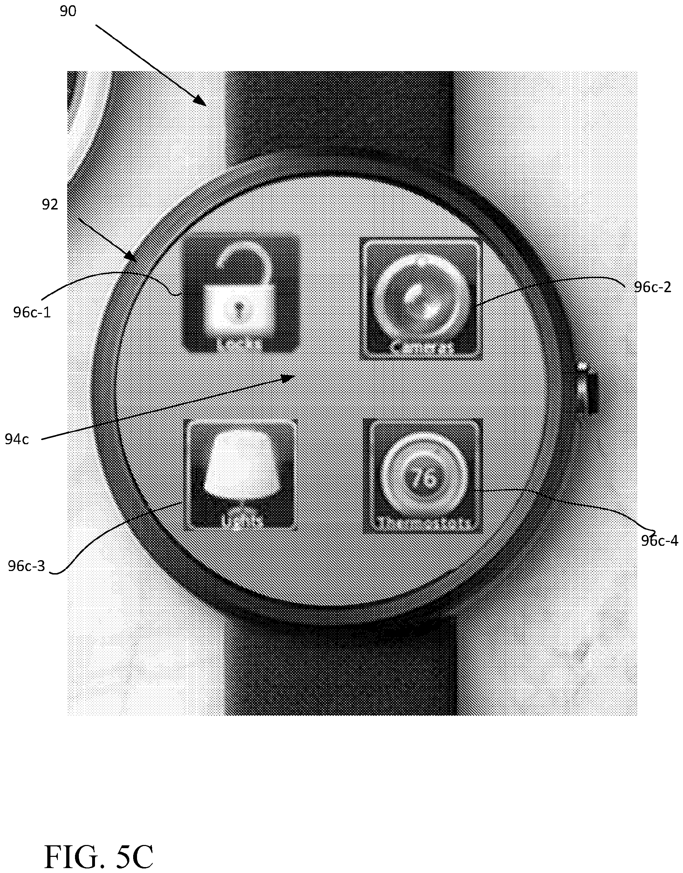

FIG. 5C shows the smartwatch 90 with the face 92 where the mobile device access management application 21 renders an interface (an alternative upper level screen) that is displayed on the face display providing scrollable items 94c (icons) that are associated with automation and security operations. In this implementation, an electronic lock app icon 96c-1, a lights app icon 96c-2, a camera app icon 96c-3, and a thermostat app icon 96c-4 are displayed. Others applications (apps) could be provided and displayed by swiping upwards/downwards, such as a security app to control a security system by the mobile device access management application 21.

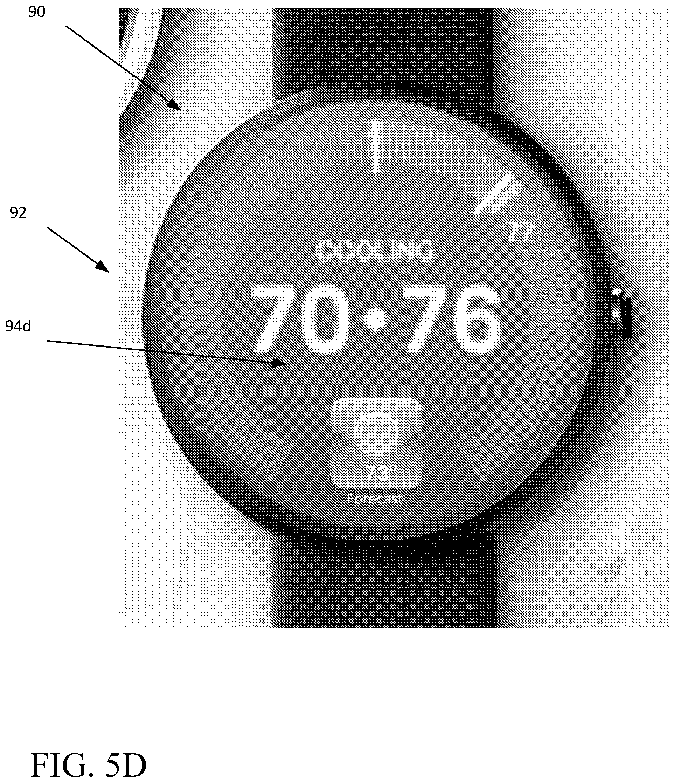

FIG. 5D shows the smartwatch 90 with the face 92 having a thermostat interface 94d produced by selection of the thermostat app 96c-4 (FIG. 5C). From the thermostat interface 94d a thermostat can be controlled by the mobile device access management application 21 displaying on the face display 92. From this screen with the smartwatch 90 in proximity to a suitably controllable thermostat (not shown) or a computing device (not shown) that directly controls such a thermostat, by a user sliding his/her finger from white tick left or right to adjust temperature points, the background changes color based on heating, cooling.

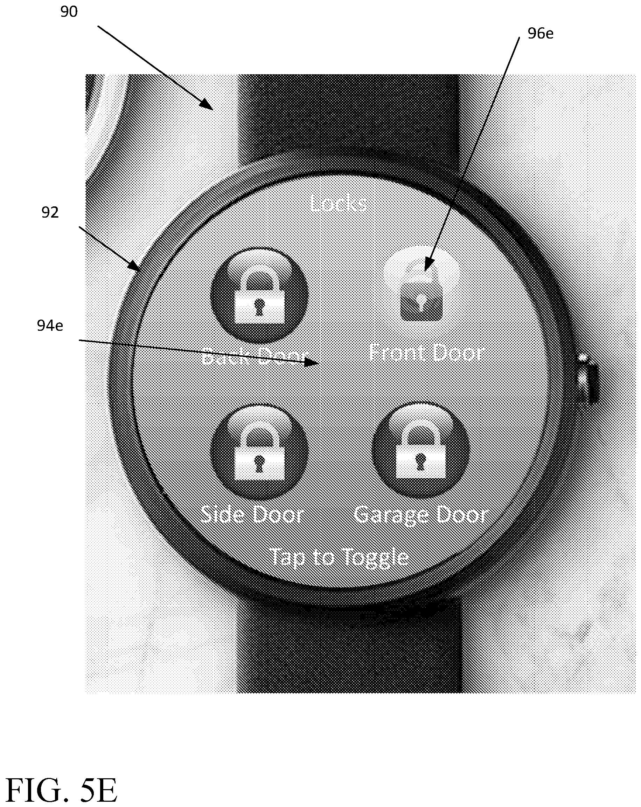

FIG. 5E shows the smartwatch 90 with the face 92 rendering an interface screen 94e from selection of the lock app 96c-1 (FIG. 5C) from the mobile device access management application 21. With the smartwatch 90 in proximity to a door, by a user sliding his/her finger on the door icon, the lock will unlock. Alternatively, in the lock app mode, the user can merely approach the door, and the lock on the door on the closest door will unlock, by the smartwatch causing the face 92 to display icons for doors having electronic locks (not shown) that are programmed to be controlled by the app. 21. The app will produce an appropriate message that is sent to the electronic lock causing the door, (closest to the smartwatch 90) to be displayed, e.g., in green for the front door 96f to automatically be unlocked based on the processor processing proximity data and/or proximity and gesture data according to how the watch and lock app are configured.

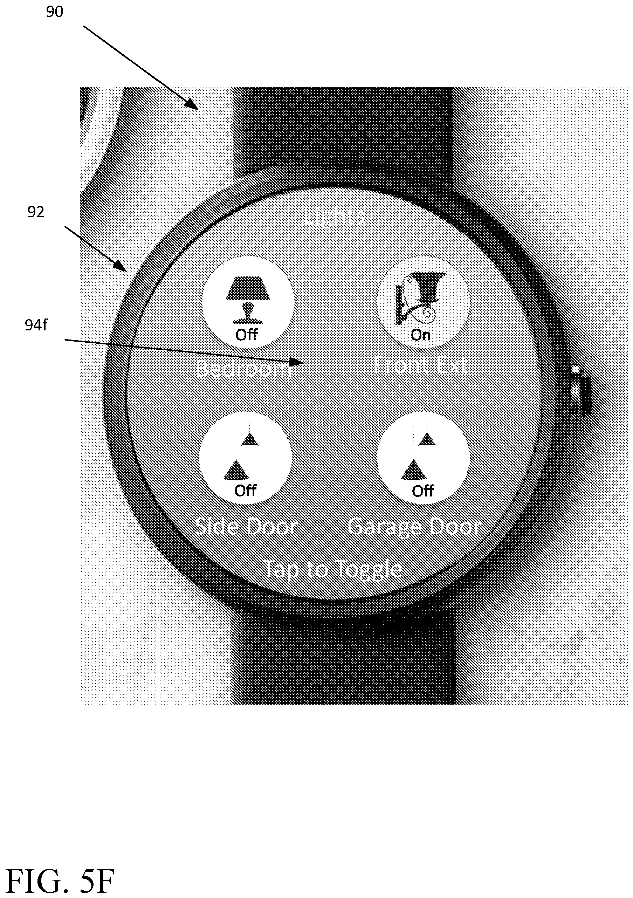

FIG. 5F shows the smartwatch 90 with the face 92 rendering the light app of mobile device access management application 21 displaying icons 94f on the face display. With the client device 20 in proximity to a light by sliding a user finger on the light icon the light will turn on. Alternatively, the user by merely approaching the light will cause the face to display the programmed light icons, causing one of the lights, e.g., displayed in green for the front door to automatically turn on based on the processor processing proximity data and/or proximity and gesture data according to how the watch and light app are configured.

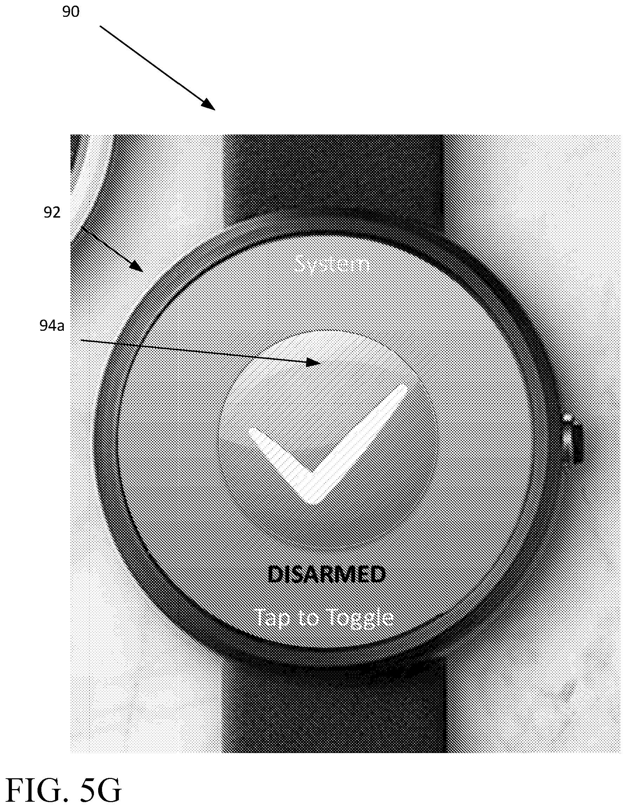

FIGS. 5G-5H shows the smartwatch face with the security app of mobile device access management application enabled and displaying icons on the face display for arming and disarming a security system as in FIG. 1. By tapping the face 92 the smartwatch, the mobile device access management application 21 produces the appropriate signals to toggle the security system of FIG. 1 between the armed state and the disarmed state.

In general, use cases of systems include burglar alarms, fire alarms (a check mark gesture for inspection acknowledges alarm), parking or gate control devices, as well as lighting, closed circuit television (CCTV), (a user would point at a camera to stream video if user has authorized access and user was in proximity to camera). Video can be streamed as small clips to the mobile device using video streaming techniques.

Other use cases include access control, thermostat control, e.g., as discussed above a circular gesture that shows numbers going up or down based on clockwise or counterclockwise rotation (either on a dial of the watch or by a user's hand holding the mobile device or watch attached to the user's wrist) to change temperature on thermostat, as well as to control music. Another use case is control of an intercom, for example, where a user is not near a intercom button, but the watch has a microphone and speaker and signals from the intercom are forward to the watch and signal to the intercom are sent from the watch. Other control scenarios include control of garages, blinds, handicap conveniences, and appliances and TV or other Entertainment Electronics. Other examples include Electric Pool Covers (swipe of arm near pool engages motor to open or close pool.) Unlocking Computer Workstations (example - up down up down clap could unlock our workstation when user is in proximity), Unlocking phones or other devices (example - shake wrist gently left right left right within 4 inches to phone to unlock screen). Exchanging of data or information among two smart devices (example - handshake prompts watch with accept contact card). Other use cases (include vehicles unlocking with user gesture of approach and upwards swipe or circle to remote start based on GPS coordinates of vehicle and user.

In each of the use cases, the particular one of the remotely controlled systems and/or devices has a format for each of the commands that can be controlled by the user device and IP address on which that system/device can receive command. The smartwatch processor produces a message according to the command in the format specified for the particular system/device to perform the determined control action by the particular one of the systems/devices.

The implementations describe thus involve recognizing a user's current location and responding to a gesture to perform an intelligent action based on the gesture and the location.

Other use-cases can involve office building automation, security and fire systems, home automation and other industries. Use of various wearable sensors and location based technologies enables user devices to make intelligent decisions that will make jobs, lives, and interactions more seamless, and efficient.

For a security application controlling a security system, information generated by/from the user device 20 is sent to a central monitoring station. An example monitoring station can be a single physical monitoring station or center in FIG. 1. However, it could alternatively be formed of multiple monitoring centers/stations, each at a different physical location, and each in communication with the data network. The central monitoring station 18 includes one or more monitoring server(s) each processing messages from the panels and/or user devices of subscribers serviced by the monitoring station. Optionally, a monitoring server may also take part in two-way audio communications or otherwise communicate over the network, with a suitably equipped interconnected panel and/or user device.

The monitoring server may include a processor, a network interface and a memory (not shown). The monitoring server may physically take the form of a rack mounted card and may be in communication with one or more operator terminals. An example monitoring server is a SURGARD™ SG-System III Virtual, or similar receiver.

The processor of each monitoring server acts as a controller for each monitoring server, and is in communication with, and controls overall operation, of each server. The processor may include, or be in communication with the memory that stores processor executable instructions controlling the overall operation of the monitoring server. Suitable software enabling each monitoring server to authenticate users for different security systems, determine whether a requested control action can be performed at the security system based on the location of a user device from the request is sent, or to perform other functions may be stored within the memory of each monitoring server. Software may include a suitable Internet protocol (IP) stack and applications/clients.

An example user device includes a display and a keypad and in some implementations, the user device is a smart phone. The keypad may be a physical pad, or may be a virtual pad displayed in part of the display. A user may interact with the application(s) run on the user device through the keypad and the display. The user device also includes a camera, a speaker phone, and a microphone.

Structurally, the user device also includes a processor for executing software instructions and perform functions, such as the user device's original intended functions, such as cell phone calls, Internet browsing, etc., and additional functions such as user authentication processes for a security system, communications with the security system and/or the monitoring station of the security system, and/or applications of the geographical limitations to control actions to be performed by the security system. A memory of the user device stores the software instructions and/or operational data associated with executing the software instructions. Optionally, the instructions and the data may also be stored in a storage device (not shown) of the user device. The user device also includes one or more device interfaces that provide connections among the different elements, such as the camera, the display, the keypad, the processor, the memory, etc., of the user device. The user device further includes one or more network interfaces for communicating with external network(s), such as the network of FIG. 1, and other devices.

Memory stores program instructions and data used by the user devices and servers. The stored program instructions may perform functions on the user devices. The program instructions stored in the memory further store software components allowing network communications and establishment of connections to a network. The software components may, for example, include an internet protocol (IP) stack, as well as driver components for the various interfaces, including the interfaces and the keypad. Other software components such as operating systems suitable for operation of the user device, establishing a connection and communicating across network will be apparent to those of ordinary skill.

Although certain embodiments of the methods and systems are described, variations can be included into these embodiments, or other embodiments can also be used. Other embodiments are within the scope of the following claims.

## Claims

1. A mobile device (20) comprising:
a motion sensor configured to sense motion of the mobile device (20); and
processing circuitry configured to:
receive location data of the mobile device (20);
detect, based on the location data, that the mobile device is approaching a remote system and determine a passive request, being a user implicit request, for the remote system; and
determine whether the passive request requires a gesture,
wherein if the passive request does not require a gesture, the processing circuitry is further configured to:
determine a control command for the control action involved in the passive request to be transmitted from the mobile device to the remote system, and
wherein if the passive request does require a gesture, the processing circuitry is further configured to:
receive gesture data from the motion sensor;
determine, based on the gesture data, the gesture made by a user with the mobile device;
determine, based on the gesture data and the passive request, a control action, wherein the control action is associated with a control command to be transmitted from the mobile device (20) to the remote system;
and in both cases transmit a message that includes the control command to be sent from the mobile device (20) to the remote system to perform the control action by the remote system.

2. The mobile device (20) of claim 1, wherein the remote system is a security system (12) and the processing circuitry includes a processor and the processor is configured to:
authenticate the user for accessing and performing the control action on the remote system.

3. The mobile device (20) of claim 1, wherein the processing circuitry comprises:
a processor device (32);
a global positioning transceiver device;
memory in communication with the processor device (32); and
a storage device that stores a program of computing instructions for execution by the processor using the memory (34), and wherein instructions further determine the remote system on which the control action is to be performed.

4. The mobile device (20) of claim 3, wherein the mobile device (20) includes an accelerometer.

5. The mobile device claim 3, wherein the mobile device (20) includes a near-field transceiver.

6. The mobile device of claim 3, wherein the processor is also configured to receive a message from the remote system confirming that the control action was performed.

7. The mobile device of claim 3, wherein the mobile device (20) is a smartwatch, and the smartwatch executes an access management application (21) that combines location information and the gesture

8. The mobile device of claim 3, wherein the mobile device (20) is a smartwatch that comprises a display device and the program comprises instructions to:
render a graphical user interface on the display device.

9. The mobile device of claim 8, wherein the instructions to render the graphical user interface comprise instructions to:
render a screen that comprises icons corresponding to applications executed by the processor in the mobile device (20) to control the remote system.

10. The mobile device of claim 8, wherein the instructions to render the graphical user interface comprise instructions to:
render a second set of screens upon selection of one of the icons, which second set of screens rendering a second set of icons that are used to perform the control action.

11. The mobile device of claim 1, wherein the gesture data represents a movement of the mobile device (20) performed by the user.

12. The mobile device of claim 1, wherein the processing circuit is configured to process the gesture made by a user with the mobile device (20) after processing the location data to determine the passive request.

13. A system comprises:
a remote system; and
a mobile device (20) as defined in claim 1.

14. The system of claim 13 wherein the remote system is a security system (12) and the mobile device (20) is a smartwatch and the mobile device (20) arms or disarms the security system (12) when the mobile device (20) is within a defined proximity to the security system (12).

## Patentansprüche

1. Mobilvorrichtung (20), umfassend:
einen Bewegungssensor, der dazu ausgelegt ist, die Bewegung der Mobilvorrichtung (20) zu erfassen; und eine Verarbeitungsschaltungsanordnung, die dazu ausgelegt ist:
Standortdaten der Mobilvorrichtung (20) zu empfangen;
basierend auf den Standortdaten zu erkennen, dass sich die Mobilvorrichtung einem entfernten System nähert, und eine passive Anforderung, die eine implizite Anforderung des Benutzers ist, für das entfernte System zu bestimmen;
und
zu bestimmen, ob die passive Anforderung eine Geste erfordert,
wobei, wenn die passive Anforderung keine Geste erfordert, die Verarbeitungsschaltungsanordnung ferner dazu ausgelegt ist:
einen Steuerbefehl für die Steueraktion der passiven Anforderung zu bestimmen, die aus der Mobilvorrichtung an das entfernte System zu übertragen ist,
und
wobei, wenn die passive Anforderung eine Geste erfordert, die Verarbeitungsschaltungsanordnung ferner dazu ausgelegt ist:
Gestendaten aus dem Bewegungssensor zu empfangen;
basierend auf den Gestendaten die Geste zu bestimmen, die ein Benutzer mit der Mobilvorrichtung macht;
basierend auf den Gestendaten und der passiven Anforderung eine Steueraktion zu bestimmen, wobei die Steueraktion mit einem Steuerbefehl verknüpft ist, der aus der Mobilvorrichtung (20) an das entfernte System zu übertragen ist;
und in beiden Fällen
eine Nachricht zu übertragen, die den aus der Mobilvorrichtung (20) an das entfernte System zu sendenden Steuerbefehl aufweist, um die Steueraktion durch das entfernte System durchzuführen.

2. Mobilvorrichtung (20) gemäß Anspruch 1, wobei das entfernte System ein Sicherheitssystem (12) ist und die Verarbeitungsschaltungsanordnung einen Prozessor aufweist und der Prozessor dazu ausgelegt ist:
den Benutzer für das Zugreifen auf das entfernte System und das Durchführen der Steueraktion zu authentifizieren.

3. Mobilvorrichtung (20) gemäß Anspruch 1, wobei die Verarbeitungsschaltungsanordnung umfasst:
eine Prozessorvorrichtung (32);
eine Sender-Empfänger-Vorrichtung zur globalen Positionierung;
einen Arbeitsspeicher in Kommunikationsverbindung mit der Prozessorvorrichtung (32); und
eine Speichervorrichtung, die ein Programm mit Computeranweisungen zur Ausführung durch den Prozessor unter Verwendung des Arbeitsspeichers (34) speichert, und wobei die Anweisungen ferner das entfernte System bestimmen, auf dem die Steueraktion durchzuführen ist.

4. Mobilvorrichtung (20) gemäß Anspruch 3, wobei die Mobilvorrichtung (20) einen Beschleunigungsmesser aufweist.

5. Mobilvorrichtung gemäß Anspruch 3, wobei die Mobilvorrichtung (20) einen Nahfeld-Sender-Empfänger aufweist.

6. Mobilvorrichtung gemäß Anspruch 3, wobei der Prozessor außerdem dazu ausgelegt ist, eine Nachricht aus dem entfernten System zu empfangen, die bestätigt, dass die Steueraktion durchgeführt wurde.

7. Mobilvorrichtung gemäß Anspruch 3, wobei die Mobilvorrichtung (20) eine Smartwatch ist und die Smartwatch eine Zugangsverwaltungsanwendung (21) ausführt, die Standortinformationen und die Geste kombiniert.

8. Mobilvorrichtung gemäß Anspruch 3, wobei die Mobilvorrichtung (20) eine Smartwatch ist, die eine Anzeigevorrichtung umfasst, und das Programm Anweisungen dazu umfasst:
eine grafische Benutzeroberfläche auf der Anzeigevorrichtung zu darzustellen.

9. Mobilvorrichtung gemäß Anspruch 8, wobei die Anweisungen zum Darstellen der grafischen Benutzeroberfläche Anweisungen dazu umfassen:
einen Bildschirm zu darzustellen, der Symbole entsprechend den Anwendungen umfasst, die durch den Prozessor in der Mobilvorrichtung (20) ausgeführt werden, um das entfernte System zu steuern.

10. Mobilvorrichtung gemäß Anspruch 8, wobei die Anweisungen zum Darstellen der grafischen Benutzeroberfläche Anweisungen dazu umfassen:
bei Auswahl eines der Symbole einen zweiten Satz von Bildschirmen zu darzustellen, wobei dieser zweite Satz von Bildschirmen einen zweiten Satz von Symbolen darstellt, die zum Durchführen der Steueraktion verwendet werden.

11. Mobilvorrichtung gemäß Anspruch 1, wobei die Gestendaten eine durch den Benutzer durchgeführte Bewegung der Mobilvorrichtung (20) darstellen.

12. Mobilvorrichtung gemäß Anspruch 1, wobei die Verarbeitungsschaltung dazu ausgelegt ist, nach dem Verarbeiten der Standortdaten die Geste zu verarbeiten, die durch einen Benutzer mit der Mobilvorrichtung (20) gemacht wird, um die passive Anforderung zu bestimmen.

13. System, umfassend:
ein entferntes System; und
eine Mobilvorrichtung (20) gemäß Anspruch 1.

14. System gemäß Anspruch 13, wobei das entfernte System ein Sicherheitssystem (12) ist und die Mobilvorrichtung (20) eine Smartwatch ist und die Mobilvorrichtung (20) das Sicherheitssystem (12) aktiviert oder deaktiviert, wenn sich die Mobilvorrichtung (20) innerhalb eines definierten Nahbereichs zum Sicherheitssystem (12) befindet.

## Revendications

1. Dispositif mobile (20) comprenant :
un capteur de mouvement configuré pour détecter un mouvement du dispositif mobile (20) ; et
un circuit de traitement configuré pour :
recevoir des données d'emplacement du dispositif mobile (20) ;
détecter, en fonction des données d'emplacement, que le dispositif mobile se rapproche d'un système distant et déterminer une requête passive, qui est une requête implicite d'utilisateur, pour le système distant ;
et
déterminer si la requête passive nécessite un geste,
dans lequel, si la requête passive ne nécessite pas de geste, le circuit de traitement est également configuré pour :
déterminer une commande de contrôle pour l'action de contrôle impliquée dans la requête passive devant être transmise du dispositif mobile au système de distant,
et
dans lequel, si la requête passive nécessite un geste, le circuit de traitement est également configuré pour :
recevoir des données gestuelles provenant du capteur de mouvement ;
déterminer, en fonction des données gestuelles, le geste réalisé par un utilisateur avec le dispositif mobile ;
déterminer, en fonction des données gestuelles et de la requête passive, une action de contrôle, l'action de contrôle étant associée à une commande de contrôle devant être transmise du dispositif mobile (20) au système distant ;
et dans les deux cas,
transmettre un message qui comporte la commande de contrôle devant être envoyée du dispositif mobile (20) au système distant pour effectuer l'action de contrôle par le système distant.

2. Dispositif mobile (20) de la revendication 1, dans lequel le système distant est un système de sécurité (12) et le circuit de traitement comprend un processeur et le processeur est configuré pour :
authentifier l'utilisateur pour qu'il accède à et effectue l'action de contrôle sur le système distant.

3. Dispositif mobile (20) de la revendication 1, dans lequel le circuit de traitement comprend :
un dispositif processeur (32) ;
un dispositif émetteur-récepteur de positionnement global ;
une mémoire en communication avec le dispositif processeur (32) ; et
un dispositif de stockage qui stocke un programme d'instructions de calcul pour exécution par le processeur au moyen de la mémoire (34), et dans lequel les instructions déterminent en outre le système distant sur lequel l'action de contrôle doit être effectuée.

4. Dispositif mobile (20) de la revendication 3, le dispositif mobile (20) comportant un accéléromètre.

5. Dispositif mobile de la revendication 3, le dispositif mobile (20) comportant un émetteur-récepteur en champ proche.

6. Dispositif mobile de la revendication 3, dans lequel le processeur est également configuré pour recevoir un message provenant du système distant confirmant que l'action de contrôle a été effectuée.

7. Dispositif mobile de la revendication 3, le dispositif mobile (20) étant une montre connectée, et la montre connectée exécutant une application de gestion d'accès (21) qui combine des informations d'emplacement et le geste.

8. Dispositif mobile de la revendication 3, le dispositif mobile (20) étant une montre connectée qui comprend un dispositif d'affichage, et le programme comprenant des instructions pour :
restituer une interface utilisateur graphique sur le dispositif d'affichage.

9. Dispositif mobile de la revendication 8, dans lequel les instructions pour restituer l'interface utilisateur graphique comprennent des instructions pour :
restituer un écran qui comprend des icônes correspondant à des applications exécutées par le processeur dans le dispositif mobile (20) pour contrôler le système distant.

10. Dispositif mobile de la revendication 8, dans lequel les instructions pour restituer l'interface utilisateur graphique comprennent des instructions pour :
restituer un deuxième ensemble d'écrans lors de la sélection d'une des icônes, lequel deuxième ensemble d'écrans restitue un deuxième ensemble d'icônes qui sont utilisées pour effectuer l'action de contrôle.

11. Dispositif mobile de la revendication 1, dans lequel les données gestuelles représentent un mouvement du dispositif mobile (20) effectué par l'utilisateur.

12. Dispositif mobile de la revendication 1, dans lequel le circuit de traitement est configuré pour traiter le geste réalisé par un utilisateur avec le dispositif mobile (20) après avoir traité les données d'emplacement pour déterminer la requête passive.

13. Système comprenant :
un système distant ; et
un dispositif mobile (20) tel que défini dans la revendication 1.

14. Système de la revendication 13 dans lequel le système distant est un système de sécurité (12) et le dispositif mobile (20) est une montre connectée et le dispositif mobile (20) arme ou désarme le système de sécurité (12) quand le dispositif mobile (20) est dans une proximité définie du système de sécurité (12).
